(19) Europäisches Patentamt
European Patent Office
Office européen des brevets

(11) **EP 0 939 715 B1**

(12) **FASCICULE DE BREVET EUROPEEN**

(45) Date de publication et mention
de la délivrance du brevet:
**02.07.2003   Bulletin 2003/27**

(51) Int Cl.⁷: **B60T 13/573**, B60T 13/565

(21) Numéro de dépôt: **97938951.7**

(86) Numéro de dépôt international:
**PCT/FR97/01527**

(22) Date de dépôt: **27.08.1997**

(87) Numéro de publication internationale:
**WO 98/022321 (28.05.1998 Gazette 1998/21)**

(54) **SYSTEME DE FEINAGE ASSISTE A REACTION HYDRAULIQUE AMELIOREE**

HILFSKRAFTUNTERSTÜTZTES BREMSSYSTEM MIT VERBESSERTER HYDRAULISCHER
REAKTION

POWER BRAKING SYSTEM WITH IMPROVED HYDRAULIC REACTION

(84) Etats contractants désignés:
**DE ES FR GB IT**

(30) Priorité: **19.11.1996  FR 9614032**

(43) Date de publication de la demande:
**08.09.1999   Bulletin 1999/36**

(73) Titulaire: **Bosch Systemes de Freinage
93700 Drancy (FR)**

(72) Inventeur: **SACRISTAN, Fernando,
Bosch Systèmes de Freinage
F-93700 Drancy (FR)**

(56) Documents cités:
**DE-A- 3 919 216          DE-A- 3 933 636
DE-A- 4 429 439**

## Description

La présente invention concerne les systèmes de freinage assisté pour véhicules à moteur, comprenant essentiellement un maître-cylindre et un servomoteur pneumatique d'assistance.

Plus précisément, l'invention concerne un système de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale pour engendrer une augmentation de pression du fluide de freinage, et d'autre part un servomoteur pneumatique d'assistance susceptible d'être commandé par application de la force d'entrée sur une tige de commande solidaire d'un plongeur contrôlant l'ouverture d'un clapet à trois voies, pour exercer la force d'actionnement sur le piston hydraulique principal, le servomoteur comportant une enveloppe rigide séparée de façon étanche en au moins deux chambres au moyen d'au moins une cloison mobile, susceptible d'être sollicitée par une différence de pression entre les deux chambres résultant de l'ouverture du clapet à trois voies et d'entraîner un piston pneumatique mobile par rapport à l'enveloppe, portant le clapet à trois voies et contribuant au moins à transmettre la force d'assistance, le piston hydraulique principal du maître cylindre comportant lui-même un cylindre mobile, creux, recevant une partie au moins de la force d'assistance, et à l'intérieur duquel coulisse, de façon étanche et suivant la direction axiale, un piston de réaction susceptible de recevoir au moins la force d'entrée, le piston de réaction étant solidaire du plongeur et délimitant dans le cylindre mobile une chambre de réaction qui communique avec le volume intérieur du maître-cylindre.

Un tel dispositif se trouve par exemple décrit dans le document DE-3 933 636.

Ces dispositifs à réaction hydraulique présentent comme avantages un contrôle optimal de la pression du liquide de freinage par la force exercée sur la pédale de frein, et une courbe caractéristique de fonctionnement, donnant la pression régnant dans le maître-cylindre en fonction de la force d'entrée exercée sur la pédale de frein, constante quelles que soient les conditions de fonctionnement.

Cependant, ils présentent l'inconvénient que, lorsque le piston de réaction transmet au plongeur la force de réaction, le choc plus ou moins brutal qui en résulte, selon la vitesse d'application de la force d'entrée, est transmis à la tige de commande solidaire du plongeur et à la pédale de freinage articulée sur la tige de commande, et est ressenti de façon relativement désagréable par le conducteur du véhicule. De plus, ces chocs peuvent endommager le plongeur et/ou le piston de réaction, et nuire au bon fonctionnement du système de freinage, ou en tous cas en réduire la durée de vie.

La présente invention se place dans ce contexte et a pour objet de proposer un système de freinage assisté, dans lequel la sensation ressentie par le conducteur lorsqu'il appuie sur la pédale de frein soit améliorée, un tel système de freinage devant de plus être d'un coût réduit, tout en ayant un fonctionnement fiable en toutes circonstances.

Dans ce but, le système de freinage selon l'invention, par ailleurs conforme à la définition qu'en donne le préambule ci-dessus, est essentiellement caractérisé en ce qu'il comprend en outre un dispositif correcteur de pression interposé entre la chambre de réaction et le volume intérieur du maître-cylindre et à travers lequel la chambre de réaction communique avec le volume intérieur du maître-cylindre.

Grâce à cette disposition, la variation de la force de réaction est progressive dans la mesure où elle résulte de la variation d'une grandeur physique, à savoir la pression hydraulique régnant dans la chambre de réaction, au lieu d'être brutale, comme c'est le cas du dispositif décrit dans le document précité.

De façon avantageuse, le dispositif correcteur de pression introduit une différence constante entre la pression régnant dans le volume intérieur du maître-cylindre et la pression régnant dans la chambre de réaction.

Selon un mode de réalisation avantageux, le dispositif correcteur de pression comporte un piston flottant, sollicité vers l'avant par des premiers moyens élastiques, mobile entre une première butée et une deuxième butée, et comportant un clapet anti-retour normalement fermé, autorisant la communication entre la chambre de réaction et le volume intérieur du maître-cylindre et interdisant la communication dans l'autre sens, le clapet anti-retour étant ouvert lorsque le piston flottant est déplacé vers l'arrière sous l'effet d'une pression dans le volume intérieur du maître-cylindre supérieure à une valeur prédéterminée.

D'autres buts, caractéristiques et avantages de l'invention ressortiront clairement de la description qui suit de modes de réalisation donnés à titre d'exemple nullement limitatifs, en référence aux dessins annexés sur lesquels :

- La Figure 1 représente une vue en coupe d'un système de freinage assisté réalisé conformément à la présente invention;

- La Figure 2 représente une vue en coupe à plus grande échelle de la partie centrale du dispositif de la Figure 1, et

- La Figure 3 représente la courbe caractéristique de fonctionnement du système de freinage assisté conforme à la présente invention, et représente les variations de la pression engendrée par le maître-cylindre en fonction de l'effort appliqué sur la pédale de frein.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 100 et un maître-cylindre 200 destiné à actionner des moteurs de frein (non représentés).

Le servomoteur 100 est prévu pour être fixé de façon habituelle sur un tablier (non représenté) de séparation entre un compartiment moteur d'un véhicule et l'habitacle de ce véhicule et pour être actionné par une pédale de freinage P située dans cet habitacle. Le maître-cylindre 200 commandant le circuit de freinage hydraulique du véhicule est fixé sur la paroi avant du servomoteur 100.

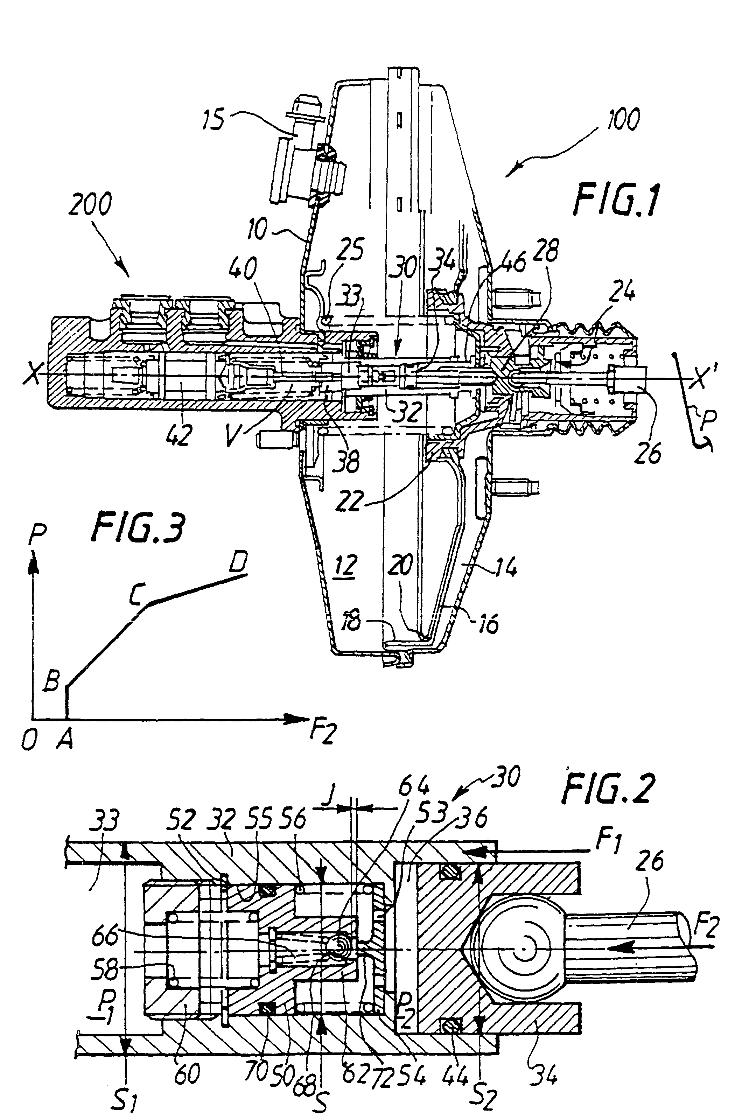

Par convention, on appelle "avant" de l'ensemble servomoteur/maître-cylindre la partie de ce dernier tournée vers le maître-cylindre 200 et "arrière" de cet ensemble la partie tournée vers la pédale de frein 12. Sur les Figures 1 et 2, l'avant est ainsi à gauche et l'arrière à droite.

Le servomoteur 100 comprend lui-même une enveloppe rigide 10 dont le volume intérieur est séparé en une chambre avant 12 et une chambre arrière 14, de façon étanche, par une cloison mobile 16 comprenant une membrane 18 et une jupe rigide 20 et susceptible d'entraîner un piston pneumatique 22 mobile à l'intérieur de l'enveloppe 10.

La chambre avant 12, dont la face avant est fermée de façon étanche par le maître-cylindre 200, est en permanence raccordée à une source de dépression par un embout 15. La pression dans la chambre arrière 14 est contrôlée par une valve à trois voies 24, commandée par une tige de commande 26 reliée à la pédale de frein P et solidaire d'un plongeur 28.

Lorsque la tige de commande 26 est en position de repos, c'est à dire tirée vers la droite, le clapet 24 établit une communication entre les deux chambres 12 et 14 du servomoteur. La chambre arrière 14 étant alors soumise à la même dépression que la chambre avant 12, le piston 22 est repoussé vers la droite, en position de repos, par un ressort 25.

L'actionnement de la tige de commande 26 vers la gauche a pour effet, dans un premier temps, de déplacer le clapet 24 de façon qu'il isole l'une de l'autre les chambres 12 et 14 puis, dans un deuxième temps, de déplacer ce clapet de façon qu'il ouvre la chambre arrière 14 à la pression atmosphérique.

La différence de pression entre les deux chambres 12 et 14 alors ressentie par la membrane 18 exerce sur la cloison mobile 16 une poussée qui tend à la déplacer vers la gauche et à lui permettre d'entraîner le piston 22 qui se déplace à son tour en comprimant le ressort 25.

L'effort d'assistance au freinage $F_1$, ou "force d'assistance", résultant de la poussée de la cloison mobile 16, et l'effort de freinage $F_2$ exercé sur la tige de commande 26, ou "force d'entrée", sont alors appliqués ensemble suivant l'axe X-X' du servomoteur 100 en direction du maître-cylindre 200, et se conjuguent pour constituer la force d'actionnement de ce dernier.

De façon plus précise, la force d'assistance $F_1$ est appliquée sur le piston hydraulique principal 30 du maître-cylindre et en provoque le déplacement vers la gauche (sur les Figures 1 et 2), ce qui entraîne une élévation de pression du liquide de freinage présent dans le volume intérieur V du maître-cylindre 200, et un actionnement des moteurs de frein reliés à ce dernier, comme cela est bien connu dans la technique du freinage.

Comme on le voit mieux sur la Figure 2, le piston hydraulique principal 30 est en fait composite et comprend d'une part un cylindre 32 mobile et creux, et d'autre part un piston de réaction 34, coulissant de façon étanche dans le cylindre mobile 32. Le piston de réaction 34 est solidaire du plongeur 28 comme on l'a représenté sur la Figure 1, ou est constitué par le plongeur lui-même comme on l'a représenté sur la Figure 2.

Le volume intérieur 33 du cylindre mobile creux 32 communique avec le volume intérieur V du maître-cylindre 200 par des ouvertures formées dans une paroi 38 (Figure 1), sur laquelle peut être fixé un dispositif 40 de réglage de l'écartement entre le cylindre mobile 32, constituant le piston primaire du maître-cylindre, et le piston secondaire 42 du maître-cylindre.

Le piston de réaction 34 peut coulisser de façon étanche dans le cylindre mobile 32 grâce à un joint annulaire 44 pour délimiter dans le cylindre mobile 32 une chambre de réaction 36. De plus, le piston de réaction 34 étant solidaire du plongeur 28, lui-même solidaire de la tige de commande 26, le piston de réaction 34 reçoit au moins la force d'entrée $F_2$ exercée sur la tige de commande 26, comme on l'a symbolisé sur la Figure 2.

Le cylindre mobile 32 est relié, par l'intermédiaire d'une bague 46, à la jupe rigide 20 de manière à recevoir une partie au moins de la force d'assistance $F_1$ exercée par cette jupe rigide 20.

Un piston flottant 50 est disposé dans le cylindre mobile 32, de façon être susceptible de se déplacer entre une première butée 52, formée par exemple par un circlips, et une seconde butée 54, qui sera explicitée par la suite. Le piston flottant 50 est sollicité vers l'avant par un premier ressort 56, en appui sur un épaulement du cylindre mobile 32 ou, comme on l'a représenté, sur la butée 54, et vers l'arrière par un deuxième ressort 58, en appui sur une butée 60 solidaire du cylindre mobile 32.

La précontrainte au repos $R_1$ du premier ressort 56 est supérieure à la précontrainte au repos $R_2$ du deuxième ressort 58, de sorte que le piston flottant est en appui, au repos, sur la première butée 52.

Le piston flottant 50 est creux et comporte en son intérieur un clapet anti-retour 62, formé dans l'exemple représenté d'un clapet à bille 64 sollicitée par un ressort 66 en direction d'un siège 68 du piston flottant 50. La seconde butée 54 est formée avec des ouvertures 53 laissant le libre passage au fluide de freinage de part et d'autre de cette butée 54, et avec un pion central 72 susceptible de coopérer avec la bille 64 pour la soulever de son siège 68 lorsque le piston flottant 50 est déplacé vers l'arrière, un jeu J existant au repos entre la bille 64 et l'extrémité avant du pion 72. Enfin, le piston flottant 50 coulisse de façon étanche grâce à un joint annulaire 70 dans un alésage 55 de section S du cylindre mobile 32.

On va maintenant exposer le fonctionnement du système de freinage assisté décrit jusqu'à présent.

Au repos, les différentes pièces mobiles occupent la position représentée sur les Figures 1 et 2, et en particulier le piston flottant 50 est en appui vers l'avant sur la butée 52 du cylindre mobile 32 sous l'effet de la sollicitation du ressort 56 diminuée de celle du ressort 58, et le clapet anti-retour 62 est fermé. D'autre part, le clapet 24 autorise la communication entre les deux chambres 12 et 14, qui sont alors à la même pression réduite.

Un premier effort sur la pédale de frein sert à dépasser la précontrainte du ressort de la tige de commande 26 et à amener le clapet 24 dans une position où il isole les deux chambres 12 et 14 l'une de l'autre. Cette augmentation de l'effort sur la pédale de frein ne fournit donc aucune augmentation de pression dans le maître-cylindre, et correspond à ce qu'il est convenu d'appeler la course morte du système de freinage assisté. Elle est représentée sur la courbe de la Figure 3 par le segment OA. Le réglage de la précontrainte au repos du ressort de la tige de commande 26 permet d'ajuster la course morte, et donc la longueur du segment OA, à toute valeur désirée.

Après cette course prédéterminée de la tige de commande 26, le clapet 24 ouvre à l'atmosphère la chambre arrière 14, et une différence de pressions s'établit entre les deux chambres 12 et 14 du servomoteur. Cette différence de pressions engendre une force d'assistance $F_1$ qui fait avancer la jupe rigide 20 et le cylindre mobile 32.

La pression hydraulique $P_1$ dans le volume interne V du maître-cylindre 200 s'élève alors, et elle est transmise, par des canalisations (non représentées) aux freins du véhicule. Cette pression $P_1$ est également transmise au volume intérieur 33 du cylindre mobile 32 et s'exerce sur la section S du piston flottant 50.

Dans un premier temps, la force engendrée par cette pression $P_1$ s'exerçant sur cette section S ne dépasse pas la précontrainte R à laquelle est soumis le piston flottant, c'est à dire la différence $R = (R_1 - R_2)$ entre les précontraintes au repos des ressorts 56 et 58, de sorte que le piston flottant 50 reste immobile par rapport au cylindre mobile 32, et que la pression $P_2$ dans la chambre de réaction 36 reste inchangée, puisque la bille 64 reste en appui sur son siège 68. Aucune réaction n'est alors ressentie sur la pédale de frein. Cette première phase de fonctionnement est représentée par le segment AB de la courbe de la Figure 3, où il y a augmentation de la pression $P_1$ dans le maître-cylindre 200 et dans les freins, sans variation de la force d'entrée. La longueur du segment AB est appelée le « saut » du servomoteur.

Le saut du servomoteur peut être réglé à toute valeur désirée en ajustant la précontrainte au repos à laquelle est soumis le piston flottant 50. On peut prévoir par exemple, comme on l'a représenté sur la Figure 2, que la butée 60 soit filetée et vissée dans un taraudage pratiqué dans le cylindre mobile 32.

Le vissage ou le dévissage de la butée 60 dans le cylindre mobile 32 a ainsi pour effet de comprimer ou de détendre le ressort 58, donc d'augmenter ou de diminuer la précontrainte $R_2$ qu'exerce ce dernier sur le piston flottant 50, c'est-à-dire encore de diminuer ou d'augmenter la valeur du saut.

Dans une deuxième phase de fonctionnement, la pression hydraulique $P_1$ augmente dans le volume 33, et atteint une valeur prédéterminée, pour laquelle, s'appliquant sur la section S du piston flottant 50, elle devient suffisante pour vaincre la précontrainte R. Le piston flottant 50 se déplace alors vers l'arrière. Il se déplace tout d'abord d'une quantité J, pour laquelle la bille 64 vient en butée sur le pion 72, comme illustré par le point B de la courbe de la Figure 3.

Une augmentation supplémentaire de la pression $P_1$ provoque un déplacement supplémentaire vers l'arrière du piston flottant 50, avec pour résultat de soulever la bille 64 de son siège 68, et de faire communiquer le volume 33 avec la chambre de réaction 36. La pression $P_2$ dans la chambre de réaction 36 s'élève alors, et s'exerce sur la section $S_2$ du piston de réaction 34, qui est alors soumis à une force de réaction, dirigée vers l'arrière, et transmise à la pédale de freinage par la tige de commande 26

La variation de la force de réaction résultant de cette élévation de pression dans la chambre de réaction 36 est rapide, et continue, puisqu'elle correspond à l'évolution d'une grandeur physique, à savoir la pression hydraulique régnant dans la chambre de réaction 36. Elle n'est pas brusque, comme dans le document précité, où elle résulte de la venue en butée sur le plongeur d'un piston soumis à la pression régnant dans le maître-cylindre.

Il en résulte ainsi une meilleure sensation ressentie par le conducteur sur la pédale de freinage, analogue à celle qui est procurée par des servomoteurs équipés d'un disque de réaction en matériau élastomère.

Le piston de réaction 34 est alors soumis sur sa section $S_2$ à la pression hydraulique $P_2$ régnant dans la chambre de réaction 36, cette pression $P_2$ étant fonc-

tion de la pression $P_1$ régnant dans le volume 33 et dans le volume V du maître-cylindre, et égale à

$$P_2 = P_1 - \frac{R}{S} = P_1 - \frac{R_1 - R_2}{S} \; ,$$

la quantité $\frac{R_1 - R_2}{S}$ étant une constante fixée par construction.

Le piston flottant 50, soumis à la précontrainte R, comportant le clapet à bille 64 susceptible de coopérer avec le pion 72, constitue ainsi un dispositif correcteur de pression, introduisant une différence constante entre la pression $P_1$ régnant dans le volume intérieur V du maître-cylindre 200 et la pression $P_2$ régnant dans la chambre de réaction 36.

Il en résulte donc sur le piston de réaction 34 une force de réaction, s'opposant à la force d'entrée $F_1$, et permettant donc de contrôler la pression hydraulique dans le maître-cylindre et dans les freins du véhicule, comme on l'a représenté par le segment BC sur la courbe de la Figure 3.

La pente de ce segment BC représente le rapport d'assistance du système de freinage. Ce rapport d'assistance est aussi égal au rapport de la section $S_1$ du cylindre mobile 32 sur la section $S_2$ du piston de réaction 34.

La force d'assistance atteint son maximum lorsque la pression dans la chambre arrière 14 du servomoteur atteint la pression atmosphérique, et ne peut donc plus augmenter. On atteint alors le phénomène connu sous le nom de saturation, et représenté par le point C sur la courbe de la Figure 3

Au-delà du point C, c'est à dire sur le segment CD, la force d'assistance $F_1$ reste constante, et toute augmentation de la décélération du véhicule est obtenue par une augmentation correspondante de la force d'entrée $F_2$.

Le fonctionnement du système de freinage que l'on vient de décrire se reproduit à chaque action de freinage, quelle que soit la vitesse d'application de la force d'entrée sur la tige de commande 26.

Lorsque le conducteur relâche son effort, le rétablissement de la communication, par l'intermédiaire du clapet 24, entre les chambres avant et arrière a pour effet de faire reculer la cloison mobile 16 et le cylindre mobile 32 sous l'effet du ressort 25, et'de faire baisser la pression $P_1$ dans le volume intérieur V du maître-cylindre.

Le piston flottant 50 peut alors revenir en appui sur la butée 52 sous l'action du ressort 56 diminuée de celle du ressort 58, et la pression $P_2$ dans la chambre de réaction 36 peut s'abaisser par l'intermédiaire du clapet à bille 64, autorisant la circulation de fluide de la chambre de réaction 36 vers le volume intérieur 33 du cylindre mobile 32 et vers le volume intérieur V du maître-cylindre. Les différentes pièces mobiles reprennent alors leur position de repos illustrée sur les Figures 1 et 2.

On a donc bien réalisé, selon la présente invention, un système de freinage assisté à réaction hydraulique qui présente des caractéristiques de fonctionnement améliorées, puisqu'il permet au conducteur du véhicule de contrôler de façon très précise la pression du fluide de freinage, sans ressentir de choc sur la pédale de freinage. Les moyens utilisés pour obtenir ce résultat sont relativement simples, et sont donc de coût réduit et de fonctionnement fiable en toutes circonstances.

Bien entendu, la présente invention est susceptible de recevoir de nombreuses variantes qui apparaîtront à l'homme du métier, et qui rentrent dans le cadre de la présente invention. C'est ainsi par exemple que l'invention pourra être appliquée aussi bien sur des servomoteurs simples ainsi qu'on l'a représenté, ou sur des servomoteurs en tandem.

**Revendications**

1. Système de freinage assisté pour véhicule à moteur, comprenant d'une part un maître-cylindre (200) rempli d'un fluide de freinage et équipé d'un piston hydraulique principal (30) destiné à recevoir une force d'actionnement (F) se composant d'une force d'entrée ($F_2$) et d'une force d'assistance ($F_1$) agissant toutes deux suivant une direction axiale (X-X') pour engendrer une augmentation de pression ($P_1$) du fluide de freinage, et d'autre part un servomoteur pneumatique d'assistance (100) susceptible d'être commandé par application de la force d'entrée ($F_2$) sur une tige de commande (26) solidaire d'un plongeur (28) contrôlant l'ouverture d'un clapet à trois voies (24), pour exercer la force d'actionnement (F) sur le piston hydraulique principal (30), le servomoteur comportant une enveloppe rigide (10) séparée de façon étanche en au moins deux chambres (12, 14) au moyen d'au moins une cloison mobile (16), susceptible d'être sollicitée par une différence de pression entre les deux chambres (12, 14) résultant de l'ouverture du clapet à trois voies (24) et d'entraîner un piston pneumatique (22), mobile par rapport à l'enveloppe (10), portant le clapet à trois voies (24) et contribuant au moins à transmettre la force d'assistance ($F_1$), le piston hydraulique principal (30) du maître cylindre (200) comportant lui-même un cylindre mobile (32), creux, recevant une partie au moins de la force d'assistance ($F_1$), et à l'intérieur duquel coulisse, de façon étanche et suivant la direction axiale, un piston de réaction (34) susceptible de recevoir au moins la force d'entrée ($F_2$), le piston de réaction (34) étant solidaire du plongeur (28) et délimitant dans le cylindre mobile (32) une chambre de réaction (36) qui communique avec le volume intérieur (V) du maître-cylindre (200) **caractérisé en ce qu'**il comprend en outre un dispositif (50, 64, 72) correcteur de pression interposé entre la chambre de réaction (36) et le volume intérieur (V) du maître-cylindre (200) et à travers lequel la chambre de réaction (36) communique avec le volume intérieur (V) du maître-cylindre (200).

2. Système de freinage assisté selon la revendication 1, **caractérisé en ce que** le dispositif correcteur de pression (50, 64, 72) introduit une différence constante entre la pression ($P_1$) régnant dans le volume intérieur (V) du maître-cylindre (200) et la pression ($P_2$) régnant dans la chambre de réaction (36).

3. Système de freinage assisté selon la revendication 2, **caractérisé en ce que** le dispositif correcteur de pression (50, 64, 72) comporte un piston flottant (50), sollicité vers l'avant par des premiers moyens élastiques (56, 58), mobile entre une première butée (52) et une deuxième butée (54), et comportant un clapet anti-retour (64, 68) normalement fermé, autorisant la communication entre la chambre de réaction (36) et le volume intérieur (V) du maître-cylindre (200) et interdisant la communication dans l'autre sens, le clapet anti-retour (64, 68) étant ouvert lorsque le piston flottant (50) est déplacé vers l'arrière sous l'effet d'une pression (P1) dans le volume intérieur (V) du maître-cylindre (200) supérieure à une valeur prédéterminée.

4. Système de freinage assisté selon la revendication 3, **caractérisé en ce que** le clapet anti-retour (64, 68) comporte un clapet à bille (64) sollicitée par des deuxièmes moyens élastiques (66) en direction d'un siège (68) formé sur le piston flottant (50).

5. Système de freinage assisté selon la revendication 4, **caractérisé en ce que** la deuxième butée (54) comporte un pion (72) susceptible de soulever la bille (64) de son siège (68) lorsque le piston flottant (50) est déplacé vers la deuxième butée (54).

6. Système de freinage assisté selon la revendication 3, **caractérisé en ce que** les premiers moyens élastiques comportent un ressort (56) sollicitant le piston flottant (50) vers l'avant, en appui en position de repos sur la première butée (52).

7. Système de freinage assisté selon la revendication 3, **caractérisé en ce que** les premiers moyens élastiques comportent un premier ressort (56) sollicitant le piston flottant (50) vers l'avant, en appui en position de repos sur la première butée (52), et un deuxième ressort (58) sollicitant le piston flottant (50) vers l'arrière, la précontrainte au repos ($R_1$) du premier ressort (56) étant supérieure à la précontrainte au repos ($R_2$) du deuxième ressort (58).

8. Système de freinage assisté selon la revendication 7, **caractérisé en ce que** la précontrainte au repos ($R_2$) du deuxième ressort (58) est réglable.

9. Système de freinage assisté selon la revendication 8, **caractérisé en ce que** le deuxième ressort (58) est disposé entre le piston flottant (50) et une troisième butée (60) formée dans le cylindre mobile (32) et dont la position axiale est réglable.

10. Système de freinage assisté selon la revendication 9, **caractérisé en ce que** la butée (60) est filetée et vissée dans un taraudage pratiqué dans le cylindre mobile (32).

**Patentansprüche**

1. System zum unterstützten Bremsen für ein Kraftfahrzeug mit einerseits einem Hauptzylinder (200), der mit einem Bremsfluid gefüllt ist und mit einem hydraulischen Hauptkolben (30) ausgestattet ist, der eine Betätigungskraft (F) empfangen soll, die aus einer Eingangskraft ($F_2$) und einer Unterstützungskraft ($F_1$) besteht, die alle beide entlang einer axialen Richtung (X-X') wirken, um eine Zunahme des Drucks ($P_1$) des Bremsfluids zu erzeugen, und andererseits einem pneumatischen Unterstützungsservomotor (100), der durch Aufbringen der Eingangskraft ($F_2$) auf eine Steuerstange (26) gesteuert werden kann, welche mit einem Tauchkolben (28) fest verbunden ist, der das Öffnen eines Dreiwegeventils (24) steuert, um die Betätigungskraft (F) auf den hydraulischen Hauptkolben (30) auszuüben, wobei der Servomotor ein starres Gehäuse (10) aufweist, das in dichter Weise in mindestens zwei Kammern (12, 14) mittels mindestens einer beweglichen Trennwand (16) aufgeteilt ist, die durch eine Druckdifferenz zwischen den zwei Kammern (12, 14) beaufschlagt werden kann, welche sich aus dem Öffnen des Dreiwegeventils (24) und aus dem Mitnehmen eines pneumatischen Kolbens (22) ergibt, der bezüglich des Gehäuses (10) beweglich ist, das Dreiwegeventil (24) trägt und zumindest zum Übertragen der Unterstützungskraft ($F_1$) beiträgt, wobei der hydraulische Hauptkolben (30) des Hauptzylinders (200) selbst einen hohlen beweglichen Zylinder (32) aufweist, der zumindest einen Teil der Unterstützungskraft ($F_1$) empfängt und in dessen Innerem in dichter Weise und in der axialen Richtung ein Reaktionskolben (34) gleitet, der zumindest die Eingangskraft ($F_2$) empfangen kann, wobei der Reaktionskolben (34) mit dem Tauchkolben (28) fest verbunden ist und im beweglichen Zylinder (32) eine Reaktionskammer (36) begrenzt, die mit dem Innenvolumen (V) des Hauptzylinders (200) in Verbindung steht, **dadurch gekennzeichnet, daß** es außerdem eine Druckkorrekturvorrichtung (50, 64, 72) aufweist, die zwischen die Reaktionskammer (36) und das Innenvolumen (V) des Hauptzylinders (200) eingefügt ist und durch die die Reaktionskammer (36) mit dem Innenvolumen (V) des Hauptzylinders (200) in Verbindung steht.

2. System zum unterstützten Bremsen nach Anspruch 1, **dadurch gekennzeichnet, daß** die Druckkorrekturvorrichtung (50, 64, 72) eine konstante Differenz zwischen dem Druck $(P_1)$, der im Innenvolumen (V) des Hauptzylinders (200) herrscht, und dem Druck $(P_2)$, der in der Reaktionskammer (36) herrscht, einführt.

3. System zum unterstützten Bremsen nach Anspruch 2, **dadurch gekennzeichnet, daß** die Druckkorrekturvorrichtung (50, 64, 72) einen schwimmenden Kolben (50) aufweist, der durch erste elastische Mittel (56, 58), die zwischen einem ersten Anschlag (52) und einem zweiten Anschlag (54) beweglich sind, nach vorn beaufschlagt wird und ein Rückschlagventil (64, 68) aufweist, das normalerweise geschlossen ist und das die Verbindung zwischen der Reaktionskammer (36) und dem Innenvolumen (V) des Hauptzylinders (200) gestattet und die Verbindung in der anderen Richtung sperrt, wobei das Rückschlagventil (64, 68) geöffnet wird, wenn der schwimmende Kolben (50) unter der Wirkung eines Drucks (P1) im Innenvolumen (V) des Hauptzylinders (200), der größer ist als ein vorbestimmter Wert, nach hinten verschoben wird.

4. System zum unterstützten Bremsen nach Anspruch 3, **dadurch gekennzeichnet, daß** das Rückschlagventil (64, 68) eine Ventilkugel (64) aufweist, die durch zweite elastische Mittel (66) in der Richtung eines Sitzes (68), der am schwimmenden Kolben (50) ausgebildet ist, beaufschlagt wird.

5. System zum unterstützten Bremsen nach Anspruch 4, **dadurch gekennzeichnet, daß** der zweite Anschlag (54) einen Stift (72) aufweist, der die Kugel (64) von ihrem Sitz (68) abheben kann, wenn der schwimmende Kolben (50) zum zweiten Anschlag (54) verschoben wird.

6. System zum unterstützten Bremsen nach Anspruch 3, **dadurch gekennzeichnet, daß** die ersten elastischen Mittel eine Feder (56) aufweisen, die den schwimmenden Kolben (50) nach vorn, in der Ruhestellung am ersten Anschlag (52) anliegend beaufschlagt.

7. System zum unterstützten Bremsen nach Anspruch 3, **dadurch gekennzeichnet, daß** die ersten elastischen Mittel eine erste Feder (56), die den schwimmenden Kolben (50) nach vorn, in der Ruhestellung am ersten Anschlag (52) anliegend beaufschlagt, und eine zweite Feder (58), die den schwimmenden Kolben (50) nach hinten beaufschlagt, aufweisen, wobei die Vorspannung in der Ruhestellung $(R_1)$ der ersten Feder (56) höher ist als die Vorspannung in der Ruhestellung $(R_2)$ der zweiten Feder (58).

8. System zum unterstützten Bremsen nach Anspruch 7, **dadurch gekennzeichnet, daß** die Vorspannung in der Ruhestellung $(R_2)$ der zweiten Feder (58) regelbar ist.

9. System zum unterstützten Bremsen nach Anspruch 8, **dadurch gekennzeichnet, daß** die zweite Feder (58) zwischen dem schwimmenden Kolben (50) und einem dritten Anschlag (60) angeordnet ist, welcher im beweglichen Zylinder (32) ausgebildet ist und dessen axiale Position regelbar ist.

10. System zum unterstützten Bremsen nach Anspruch 9, **dadurch gekennzeichnet, daß** der Anschlag (60) mit einem Gewinde versehen ist und in ein im beweglichen Zylinder (32) ausgebildetes Innengewinde geschraubt ist.

**Claims**

1. Boosted braking system for a motor vehicle, comprising on the one hand a master cylinder (200) full of brake fluid and equipped with a main hydraulic piston (30) intended to receive an actuating force (F) composed of an input force $(F_2)$ and of a boost force $(F_1)$ both acting in an axial direction (X-X'), so as to cause an increase in pressure $(P_1)$ in the brake fluid and on the other hand a pneumatic booster (100) which can be controlled by the application of the input force $(F_2)$ to a control rod (26) integral with a plunger (28) controlling the opening of a three-way valve (24) in order to exert the actuating force (F) on the main hydraulic piston (30), the booster including a rigid casing (10) divided in leaktight fashion into at least two chambers (12, 14) by means of at least one moving partition (16) which can be acted upon by a difference in pressure between the two chambers (12, 14) resulting from the opening of the three-way valve (24) and can drive a pneumatic piston (22), which can move with respect to the casing (10), carrying the three-way valve (24) and contributing at least to transmitting the boost force $(F_1)$, the main hydraulic piston (30) of the master cylinder (200) itself including a hollow moving cylinder (32) receiving at least some of the boost force $(F_1)$, and inside which there slides, in leaktight fashion and in the axial direction, a reaction piston (34) which can receive at least the input force $(F_2)$, the reaction piston (34) being integral with the plunger (28) and delimiting within the moving cylinder (32) a reaction chamber (36) which communicates with the interior volume (V) of the master cylinder (200), **characterized in that** it also comprises a pressure-regulating device (50, 64, 72) inserted between the reaction chamber (36) and the interior volume (V) of the master cylinder (200) and via which the reaction chamber (36) communicates with the interior volume (V) of the master cylinder (200).

2. Boosted braking system according to Claim 1, **characterized in that** the pressure-regulating device (50, 64, 72) introduces a constant difference between the pressure ($P_1$) prevailing in the interior volume (V) of the master cylinder (200) and the pressure ($P_2$) prevailing in the reaction chamber (36).

3. Boosted braking system according to Claim 2, **characterized in that** the pressure-regulating device (50, 64, 72) includes a floating piston (50) urged forwards by first elastic means (56, 58), able to move between a first stop (52) and a second stop (54), and including a normally closed non-return valve (64, 68) allowing communication between the reaction chamber (36) and the interior volume (V) of the master cylinder (200) and preventing communication in the other direction, the non-return valve (64, 68) being opened when the floating piston (50) is shifted backwards under the effect of a pressure (P1) in the interior volume (V) of the master cylinder (200) which exceeds a predetermined value.

4. Boosted braking system according to Claim 3, **characterized in that** the non-return valve (64, 68) includes a ball valve, the ball (64) of which is urged by second elastic means (66) towards a seat (68) formed on the floating piston (50).

5. Boosted braking system according to Claim 4, **characterized in that** the second stop (54) includes a pip (72) capable of lifting the ball (64) off its seat (68) when the floating piston (50) is shifted towards the second stop (54).

6. Boosted braking system according to Claim 3, **characterized in that** the first elastic means include a spring (56) urging the floating piston (50) forwards, in a position of rest resting against the first stop (52).

7. Boosted braking system according to Claim 3, **characterized in that** the first elastic means include a first spring (56) urging the floating piston (50) forwards, in a position of rest resting against the first stop (52), and a second spring (58) urging the floating piston (50) backwards, the preload at rest ($R_1$) of the first spring (56) being greater than the preload at rest ($R_2$) of the second spring (58).

8. Boosted braking system according to Claim 7, **characterized in that** the preload at rest ($R_2$) of the second spring (58) is adjustable.

9. Boosted braking system according to Claim 8, **characterized in that** the second spring (58) is arranged between the floating piston (50) and a third stop (60) which is formed in the moving cylinder (32) and the axial position of which is adjustable.

10. Boosted braking system according to Claim 9, **characterized in that** the stop (60) is threaded and screwed into a tapping made in the moving cylinder (32).

FIG.1

FIG.3

FIG.2